# EUROPEAN PATENT APPLICATION

(11) **EP 1 521 484 A1**
(43) Date of publication of application: **06.04.2005**
(21) Application number: 03022178.2
(22) Date of filing: 30.09.2003
(51) Int. Cl.: H04Q 3/00

(54) **Load sharing in SS7 networks**

(71) Applicant: SIEMENS AKTIENGESELLSCHAFT, 80333 München (DE)
(72) Inventor: Serroyen, Gert, 2627 Schelle (BE); Verwimp, Gery, 2140 Borgerhout (BE)

(57) **Abstract**

Messages in an SS7 network are load shared for directing message traffic to multiple destinations. An SCCP message is received requiring GT translation. An extended number of load sharing bits is calculated either from the received OPC and SLS, or from the sequence control parameter for locally originated traffic. Thus in-sequence delivery is guaranteed. A plurality of originating, intermediate and destination network nodes can be involved. To a subset of messages, a round-robin load distribution can be applied. Messages can be distributed over destinations in different (logical) SS7 networks.

## Description

### BACKGROUND

### Field Of The Invention.

This invention relates to load sharing and, more particularly, to load sharing in an SS7 network towards multiple destinations.

### Related Information.

On the public switched telephone network (PSTN), the SS7 network is the standard that governs how an interconnected set of network elements is to be used to exchange messages in support of telecommunications functions. The SS7 protocol is designed to both facilitate these functions and to maintain the network over which they are provided.

The Signaling System 7 (SS7) puts the information required to set up and manage telephone calls in a separate network rather than within the same network that the telephone call is made on. Signaling information is in the form of digital packets and like most modern protocols, the SS7 protocol is layered.

SS7 consists of a set of reserved or dedicated channels known as signaling links and the network points that they interconnect. These sets are known as signaling link sets. There are three kinds of network points (which are called signaling points): Service Switching Points (SSPs), Signal Transfer Points (STPs), and Service Control Points (SCPs). SSPs originate or terminate a call and communicate on the SS7 network with SCPs to determine how to route a call or set up and manage some special feature. Traffic on the SS7 network is routed by switches called STPs. SCPs and STPs are usually mated so that service can continue if one network point fails.

As mentioned, SS7 is layered. The Message Transfer Part-Level 1 or physical layer defines the physical and electrical characteristics of the signaling links of the SS7 network. The Message Transfer Part, Level 2, provides link-layer functionality. It ensures that the two end points of a signaling link can reliably exchange signaling messages. The Message Transfer Part, Level 3, extends the functionality provided by MTP level 2 to provide network layer functionality. It ensures that messages can be delivered between signaling points across the SS7 network regardless of whether they are directly connected.

MTP Level 3 routes messages based on the routing label in the signaling information field (SIF) of message signal units. The routing label is comprised of the destination point code (DPC), originating point code (OPC), and signaling link selection (SLS) field. Point codes are numeric addresses which uniquely identify each signaling point in an SS7 network. When the destination point code in a message indicates the receiving signaling point, the message is distributed to the appropriate user part (e.g., ISUP or SCCP) indicated by the service indicator in the service information octet (SIO). Messages destined for other signaling points are transferred provided that the receiving signaling point has message transfer capabilities (like an STP). The selection of outgoing link is based on information in the DPC and SLS.

The signaling connection control part (SCCP) provides two major functions that are lacking in the MTP. The first of these is the capability to address application service elements (e.g. IN, MAP) within a signaling point. The MTP can only receive and deliver messages for a limited number of user parts (e.g. ISUP, SCCP). The second function provided by the SCCP is the ability to perform distributed routing using a capability called global title translation (GTT). GTT frees originating signaling points from the burden of having to know every potential destination to which they might have to route a message. A switch can originate a query, for example, and address it to an STP along with a request for GTT. The receiving STP can then examine a portion of the message, make a determination as to where the message should be routed, and then route it.

The Transaction Capabilities Application Part (TCAP) defines the messages and protocol used to communicate between applications (deployed as subsystems) in nodes. It is used for database services such as calling card, 800, and IN as well as switch-to-switch services including call completion on busy subscriber and call return. Because TCAP messages must be delivered to individual applications within the nodes they address, they use the SCCP for transport.

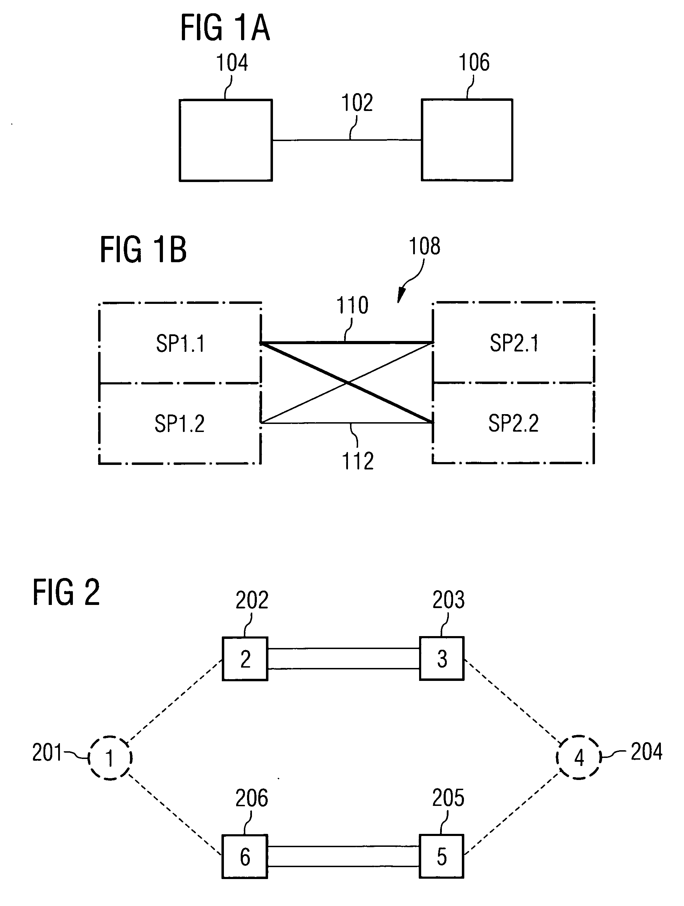

In the SS7 network environment, signaling limitations may occur between two network elements because of restrictions put forward in the ITU-T recommendations. According to these recommendations, only a single link set between two adjacent network elements is allowed. Typically, as shown in Figure 1A, the standard link set 102 contains at most 16 links between two signaling points SP1 and SP2 104, 106. With the use of narrow band links, this limits the signaling capacity between two nodes to 1 Mbps in each direction. This would not fulfill the signaling bandwidth requirements that exist for certain GSM (HLR, SM-SC) or Intelligent Networks IN (SCP) network nodes.

GSM (Global System for Mobile communication) is a digital mobile telephone system that is widely used in Europe and other parts of the world. GSM uses a variation of time division multiple access (TDMA) and is the most widely used of the three digital wireless telephone technologies (TDMA, GSM, and CDMA). GSM digitizes and compresses data, then sends it down a channel with two other streams of user data, each in its own time slot. It operates at either the 900 MHz or 1800 MHz frequency band.

GSM is the de facto wireless telephone standard in Europe. It is estimated that GSM has over 700 million users worldwide (status end June 2002) and is available in 120 countries. Since many GSM network operators have roaming agreements with foreign operators, users can often continue to use their mobile phones when they travel to other countries.

The signaling bandwidth restriction can be overcome with the use of multiple (logical) SS7 networks or multiple point codes (SP1.1, SP1.2, SP2.1, SP2.2) shown in Figure 1B, to facilitate multiple signaling link sets between two physical nodes. However, the existing standardized load sharing algorithms are insufficient to make use of this enhanced signaling connectivity.

For example, MTP load sharing across multiple SS7 link sets is based on bits of the 4 bit ITU-T SLS value. However, when an SLS bit is used for link set selection, it cannot be used anymore for link selection within the chosen link set. As a result, nothing is achieved with regards to bandwidth. Thus, only two networks Net 1 (SP1.1-SP2.1 and SP1.1-SP2.2) 110 and Net2 (SP1.2-SP2.1 and SP1.2-SP2.2) 112 may be set up and no others. For MTP transfer traffic a 5 or 6 bit pseudo SLS value can be generated taking into account some additional message parameters (OPC, ISUP, CIC).

However, for SCCP relay traffic (routed on GT) the MTP approach does not work because the origin of this kind of traffic will always be the own node from MTP point of view. Furthermore, it is possible that the adjacent network node does not have multiple point code facilities so that only one direct route can be used on MTP level anyway. And in case of final GT translation, only load sharing on SCCP level can guarantee the correct working of SCCP subsystem management.

SCCP load sharing is based on GT translation and currently limited to two primary destinations in the same SS7 network only. This effectively doubles the amount of SCCP signaling traffic that can be sent between two physical nodes (32 links), but only when both nodes support multiple point codes (i.e., in the same SS7 network). Even then, this remains insufficient for heavily used network resources in both GSM and IN networks.

What is needed is a means and method for load sharing that operates with GSM or IN network nodes. What is needed is a load sharing means and method for performing traffic distribution over an extended number of nodes (intermediate or final) which may be located in different SS7 networks.

### OBJECTS & SUMMARY OF THE INVENTION

It is an object of the invention to provide load sharing.

It is an object of the invention to provide load sharing for performing traffic distribution over an extended number of nodes.

It is an object of the invention to provide load sharing in an SS7 network.

It is an object of the invention to provide load sharing where the destinations may be located in different SS7 networks.

It is an object of the invention to provide load sharing that operates with GSM or IN network nodes.

In accordance with these and other objectives there is provided a method for load sharing in an SS7 network for directing SCCP message traffic to multiple destinations. The in-sequence delivery requirements for SCCP protocol class 1 connectionless messages or messages belonging to the same SCCP connection are however obeyed..

An apparatus for load sharing in an ss7 network for directing message traffic to multiple destinations is further provided.

### BRIEF DESCRIPTION OF THE DRAWINGS

The drawings will illustrate an example of the invention, wherein:
Figures 1A and 1B illustrate the basic load sharing network;
Figure 2 shows the exemplary load sharing; and
Figure 3 illustrates the exemplary network.

### DETAILED DESCRIPTION OF THE PREFERRED EMBODIMENTS

The invention provides an enhanced load sharing technique, while preserving the in-sequence delivery condition. The invention, thus, prescribes a set of rules to be observed in load sharing.

SCCP provides in-sequence delivery of messages, e.g. messages belonging to a single TCAP transaction are delivered over a single link to guarantee delivery in the same sequence as transmitted. By way of terminology, SS7 terms SCCP protocol class 1 traffic as that traffic that must be delivered in sequence. SCCP Protocol class 0 traffic must not be delivered in sequence.

The first rule extends the number of load sharing bits generated by SCCP during GT translation by prescribing that only messages with the same origin point code (OPC) and Signaling Link Selection (SLS) should be delivered in sequence. In this manner, the load sharing bits can be calculated based on the OPC and SLS of the received message instead of only the SLS. With a sufficient number of possible OPC values, more than the traditional 4 SLS bits, directly derived from the received SLS, can be generated to provide an extended load distribution. In this way, SCCP can use the extra bits for load distribution over several destinations, while keeping the full 4-bit SLS available for subsequent MTP load sharing over the links of the linkset towards the selected destination.

The nodes in SS7-networks, as previously mentioned, are called signaling points (SP) and are identified by a unique 14-bit integer called the signaling point code (SPC). SPs are connected by signaling links. The bandwidth of a signaling link is normally 64 kbit/sec. If a larger bandwidth is necessary up to 16 links between two signaling points can be used. These links between two SPs are called a linkset.

The loadsharing in SS7-networks is based on the signaling link selection field (SLS), a 4-bit integer provided by the userpart in the MTP-TRANSFER primitive. Therefore all userparts should select the SLS values for each destination with a uniform probability of _{1 16}. The point codes of the destination (DPC) and of the origin (OPC) are also provided by the userpart and the triple consisting of the SLS, OPC and DPC is called routing label and is part of each MTP-3 protocol data unit, called message signal unit (MSU).

The MTP-3 provides a reliable in sequence delivery for all MSUs with the same routing label by ensuring that such MSUs take the same physical path through the network. There are two kinds of loadsharing: loadsharing within a linkset and loadsharing between linksets. For a better understanding of these two loadsharing concepts consider the network of figure 2. For linksets consisting of more than one link the SLS-value is used to select the link in the linkset. To distribute the load equally on the links a linkset therefore thus normally consists of 1, 2, 4, 8 or 16 links. For example, in figure 2 the linkset between the SP with SPC 2, denoted by SP(202), and SP(203) consists of 2 links. For loadsharing between linksets consider tra_c from SP(201) to SP(204). There is one linkset each consisting of one link between SP(201) and SP(202) and between SP(201) and SP(206), respectively. SP(201) uses the two linksets (also called a combined linkset) for tra_c to SP(204) with equal priority.

The choice between the linksets is made using one bit of the SLS-field. This in turn implies that the linksets between SP(201) and, respectively, SP(202) or SP(206) cannot consist of more than 8 links each, as only at most 3 bits of the SLS vary anymore and are thus available for loadsharing. The same holds true for the linksets between SP(202) and SP(203) and between SP(206) and SP(205). Furthermore, SP(202) and SP(206) must know which bit of the SLS has been used by SP(201) for linkset selection. Therefore a network wide coordination regarding which of the SLS bits is used for linkset selection is necessary and cooperation between SS7-network planing departments is important.

The present invention requires that only messages with the same OPC and SLS are to be delivered in sequence. Thus, the SLS addressing is reserved for a sub set of conditions, thereby extending the address set of the 4-bit SLS.
However, the invention is not limited to the particular SMSC standard. The message origin can be any switching centre or node in the SS7 network, for example. For that matter, the destination can be any service node, including but not limited to: SCP (IN Service Control Point), SMSC (SMS Service Centre), HLR (Home Location Register), etc. The invention is applicable to any originating or intermediate node, where the SCCP GTT function, or similar function, is included and thus load sharing can be applied.

In an originating node, the OPC of the received message is not taken into account, but instead the 8-bit sequence control parameter provided by the local SCCP-user is taken to perform extended load sharing.

A second rule prescribed by the invention is that, for protocol class 0 messages, a round-robin selection is applied. It is important to note that this may also be applied for non-segmented, TC_Begin and CR messages. A TC_Begin is a message from one of the SCCP users from the TCAP and initiates a transaction. Similarly, a CR is a Connection Request, which provides a similar transaction initiation function. This means that, for a transaction or connection setup message, any number of destinations (intermediate or final) can be supported.

A third rule prescribed by the invention, because of the use of multiple SS7 networks, the same physical destination may look as multiple logical destinations. Therefore, load sharing is performed over different destinations even if these appear to be in different (logical) SS7 networks.

These rules may be prescribed separately or in combination. Keeping them in mind, this invention enhances SCCP load sharing to perform traffic over any number of nodes possibly located in different SS7 networks. An advantage of the invention is that bandwidth limitations between adjacent SS7 nodes are completely removed for SCCP traffic. In addition, the invention does not require SS7 capabilities in the adjacent node beyond those specified in ITU-T.

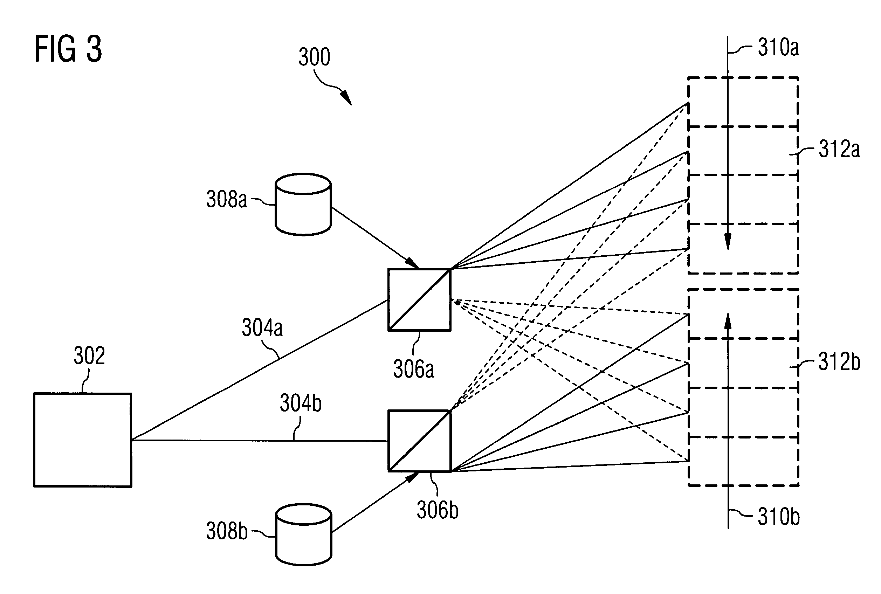

Now, a concrete example shall be explained with reference to the exemplary network 300 shown in Figure 3. In this example, the invention is applied to load share short message service (SMS) messages. As shown, a mobile switching center (MSC) 302 serves to switch a share, in the example shown 50/50, of the queries 304a, 304b to signal transfer points STP1, STP2) 306a, 306b, respectively, which act as SCCP relay points. Global Title Translation (GTT) units 308a, 308b, respectively, present on each of the STPs, determine how to route the traffic.

As mentioned earlier, SCCP performs routing using a capability called global title translation (GTT). GTT frees originating signaling points from the burden of having to know every potential destination to which they might have to route a message. A switch can originate a query, for example, and address it to an STP along with a request for GTT. The receiving STP can then examine a portion of the message, make a determination as to where the message should be routed, and then route it.

Thus, in the example of Figure 3, the MSC 302 mày perform an intermediate SCCP translation and the final translation is performed by the GTTs 308a, 308b. The messages are then routed to their final destinations according to the translation. In this case, to the front end processors (FEP-1 through FEP-4) 310a, 310b of either the first short message service center (SMSC) 312a or the second short message service center (SMSC) 312b. According to the example, the first GTT 308a reserves the FEPs 1-4 310a of SMSC-A 310a as primaries D1-D4, whilst reserving the second SMSC_B 310b as a backup. Conversely, the second GTT 308b reserves the FEPs 1-4 310b of SMSC-B 310b as primaries D5-D8, while reserving the first SMSC-A 310a as a backup.

According to the rules of the present invention, SMS messages having the same OPC and SLS are delivered in-sequence. According to the second rule, the protocol class 0 messages, or TC_Begin or CR messages, are directed in a round robin fashion. Suppose that the SMSC does not possess several FEPs, and thus several point codes, but only a single point code. In that case, the multiple SS7 network feature on the STP can be used to logically duplicate the SMSC by defining it as DPC in each of the STPs networks. Now, although the SMSC may appear to the STP as 4 different network nodes in 4 different networks (each time with the same point code), according to the third rule SCCP is still capable of performing load sharing over all 4 destinations.

The present invention is described with reference to the examples shown in the figures, but it shall be appreciated that the invention covers not only these specific examples, but others within the spirit and scope of the described embodiments.

## Claims

1. A method for load sharing in an SS7 network for directing message traffic to multiple destinations, comprising the steps of:
receiving an SCCP message for further GT translation;
determining extended load sharing bits based on received OPC and SLS to comply with the in-sequence delivery requirement of protocol class 1 messages;
distributing the messages over the destinations determined by GT translation making use of the extended load sharing bits.

2. The method according to claim 1, further comprising the step of selecting messages for round robin distribution.

3. The method according to claim 2, wherein the step of selecting messages selects protocol class 1 messages.

4. The method according to claim 2, wherein the step of selecting messages selects non-segmented TC_Begin messages.

5. The method according to claim 2, wherein the step of selecting messages selects CR messages.

6. The method according to any of the preceding claims, further comprising the step of distributing these messages to destinations in different logical SS7 networks.

7. An apparatus for load sharing in an SS7 network for directing message traffic to multiple destinations, comprising:
a switching center for originating messages;
a plurality of switches for switching the messages to the multiple destinations; and
wherein the switches switch the messages according to extended load sharing bits determined on the basis of received OPC and SLS to comply with the in-sequence delivery requirement of protocol class 1 messages and distributing the messages over the destinations determined by GT translation making use of the extended load sharing bits.

8. The apparatus according to claim 7, wherein the switching center selects messages for round robin distribution.

9. The apparatus according to claim 8, wherein the switching center selects protocol class 1 messages.

10. The apparatus according to claim 8, wherein the switching center selects non-segmented TC_Begin messages.

11. The apparatus according to claim 8, wherein the switching center selects CR messages.
